# EUROPEAN PATENT SPECIFICATION

(11) **EP 3 078 845 B1**
(45) Date of publication and mention of the grant of the patent: **27.03.2019**
(21) Application number: 16169766.9
(22) Date of filing: 06.12.2012
(51) Int. Cl.: F03B 13/26, F03B 17/06

(54) **SUPPORT FOR WATER TURBINE**
TRÄGER FÜR EINE WASSERTURBINE
SUPPORT POUR TURBINE À EAU

(30) Priority: 09.12.2011 GB 201121179
(43) Date of publication of application: 12.10.2016
(62) Divisional of application: 12806623.0
(73) Proprietor: TidalStream Limited, Southam, Warwickshire CV47 2BT (GB)
(72) Inventor: Todman, Michael T., Warwickshire CV47 2BT (GB); Armstrong, John R.C., London W4 2AF (GB)
(74) Representative: Gray, James

(56) References cited:
- GB-A- 2 441 821
- GB-A- 2 450 624

## Description

This invention relates to turbines for the generation of power from water currents, especially those from coastal regions or river estuaries.

Many systems have been proposed for the mounting of such turbines in the stream flow. A particular problem is how to arrange that turbines can be delivered, deployed in an operating position and then recovered for maintenance or removal.

A feature of some such systems is the use of a mounting frame with variable buoyancy to assist in the deployment and recovery stages. GB 2348249B (Armstrong) for instance discloses the use of variable buoyancy to roll a mounting frame about an inclined longitudinal axis passing through an underwater anchorage, from a deployed operating position to a horizontal floating maintenance position. GB 2434410A (Todman) discloses the use of variable buoyancy combined with controlled flexure of a mounting frame about a rigid tether arm to achieve a similar effect, but without roll rotation. Several other proposals have been made on the basis of flexible tethers such as cables, for instance GB 2256011A (Fraenkel).

Other factors to consider include the stability of pitching of the turbines in operating flows (i.e. rotation about a transverse horizontal axis through the underwater anchorage) Some prior disclosures, such as those referenced above and GB 2409885A (MCT), use surface penetration by one or more parts of the mounting to achieve buoyancy-driven passive pitching stability, so that under varying flow and drag conditions the turbines will rise and fall within controlled limits. Others, wishing to achieve complete submersion of their turbines, use instead of surface-piercing members, active control surfaces to achieve such stability (e.g. WO 00/42318A Dehlsen). Some, for instance GB 2422878B (Mackie), propose surface-piercing members to control pitching and active control surfaces to regulate roll of a flexibly tethered turbine. Another relevant prior art design is known from GB 2 450 624.

The present invention provides an alternative arrangement with movement from a floating deployment condition to a substantially submerged operating position by adjustment of ballast.

According to the invention there is provided an underwater turbine mounting comprising a buoyant elongate frame adapted to mount one or more stream flow turbines thereon, a rigid arm having a pivotal connection at one end to said frame, the other end of said arm being adapted for connection to an underwater anchorage, and means to vary the buoyancy of said frame whereby said frame is pivotable in use about said connection between a substantially horizontal maintenance position and a substantially upright operating position, wherein in the operating condition the first buoyancy chamber is provided fore and the second buoyancy chamber aft of an upright axis of the frame with respect to a stream flow direction, to permit trimming of the upright orientation of the frame.

Movement between the maintenance and operating positions is substantially determined by variation of buoyancy, for example by addition or removal of ballast water via suitable pumps, valves and the like. Compressed air may be used to purge water ballast from a buoyancy chamber. Movement may be controlled by a brake or the like acting between the frame and the arm, for example a caliper brake of one component gripping a brake surface of a relatively movable component.

In one embodiment the frame comprises one or more buoyancy chambers, and may be defined by a substantially hollow vessel adapted for movement between a floating deployment/maintenance condition and a submerged or partially submerged operating condition.

Movement between the maintenance and operating conditions may be assisted by drag of the stream flow and/or by turning of the water turbines in a favourable direction. The turbine(s) may be allowed to auto-rotate, or may be driven to generate a propulsive force in the desired direction, or several turbines may rotate in different directions - in each case additional drag is generated to the intent that movement of the mounting is assisted.

In one embodiment the mounting is provided with one or more active drag surfaces deployable between an active condition in which drag is induced to move the
mounting arcuately, and a substantially inactive condition in which arcuate movement is not induced.

In one embodiment a variation of buoyancy turns the mounting substantially towards the operating condition, whereupon active drag surfaces are deployed to urge or assist the mounting into the operating condition.

In use the frame supports one or more stream flow turbines, typically horizontal axis turbines arranged on the downstream side of the frame. The frame pivots substantially through a right angle between the operating and maintenance conditions, and such an arrangement allows the turbines to be substantially or wholly out of the water in the maintenance condition of the mounting.

The arm may comprise a towing member of the mounting when in the deployment condition, and for this purpose may float or be latched to the frame so as to project substantially ahead thereof. In the towing condition the leading end of the arm (the anchorage end) is substantially at the surface. Upon reaching the deployment location, the arm is unlatched and lowered for connection to an underwater anchorage whilst remaining attached to the frame. The anchorage provides a pivotal connection to permit rise and fall of the mounting in the stream flow, and for tidal installations may permit pivoting of the arm about a substantially vertical axis so as to permit generation on both a rising and falling tide. The articulation at the anchorage is preferably provided at the end of the arm so as to provide for maintenance thereof at the surface, for example in the form of an universal joint. The arm may comprise the articulation and a plug and socket arrangement at the anchorage, with a suitable latch.

In a preferred embodiment the arm and frame abut in the operating condition so as to prevent over-rotation of the frame when pivoting to the operating condition. Any suitable abutment may be provided, including direct contact between the arm and frame, or the use of a stay sliding in a collar to an end stop. The abutment may include a compliant and/or resilient buffer, and may permit some relative angular motion about the mean position, typically no more than ±10°. The arm and frame may be latched in the operating condition at a substantially fixed angular relationship.

In use the mounting trails in the stream flow, and accordingly stream flow drag may be utilized to assist motion from the maintenance to the operating condition. In particular, buoyancy may be varied to move the frame to a condition just short of the (upright) operating condition. This arrangement ensures that a reverse movement is assured if buoyancy is increased. Final movement to the operating condition may be by way of active drag surfaces and/or by an actuator. The actuator may for example comprise a motor operable about the pivot axis between the arm and the frame, a grab device, a nudge device or any other suitable apparatus for obtaining the final increment of movement to the operating condition.

Alternatively, the ballast chambers may be subdivided into separate sections to enable the trimming of the frame as it nears its engagement position with the tether arm. In one embodiment, the frame has in its near-vertical position separate fore and aft chambers (with respect to the stream flow direction), adding or removing ballast water differentially will enable adjustment of the angle of the frame to the vertical so that the correct position for latching can be achieved. Typically slow incremented movement is achieved. For trimming of the frame rotation between the horizontal and vertical positions, differential ballasting in chambers disposed along the upright axis of the frame (in the deployed condition) is used.

In one example the arm is substantially straight and pivoted to the frame at the rear thereof with respect to stream flow direction (in the maintenance condition). Such a connection is below the mid-point of the frame when in the operating condition, and in one embodiment adjacent the lower end thereof. In another example the arm is cranked downwardly in the deployment condition in the manner of an elbow, and is connected substantially at the mid-point of the elongate frame.

In another example, the arm may be connected further towards the bow of the frame (in the maintenance condition), with a lower extension of the arm fixing against the stern, or lower part, of the frame in the operating condition.

The invention also provides a method of deployment of a stream flow turbine mounting solely by adjustment of buoyancy thereof.

Other features of the invention will be apparent from the following description of a preferred embodiment shown by way of example only in the accompanying drawings, in which:-
Fig. 1 is a side elevation of a first embodiment of the invention in the deployment condition;
Fig. 2 corresponds to Fig. 1 and shows the first embodiment in the maintenance condition;
Fig. 3 shows the first embodiment during movement to the operating condition;
Fig. 4 shows the first embodiment in the operating condition;
Fig. 5 shows a perspective view of a twin boom embodiment in the operating condition;
Fig. 6 shows a second embodiment of the invention in the operating condition;
Figs. 7 and 8 show a third embodiment of the invention, respectively in the deployment and operating condition.
Figs. 9 to 11 show a further embodiment of the invention, respectively in the deployment, maintenance and operating condition, and
Fig. 12 shows a further embodiment of the invention in the operating condition.

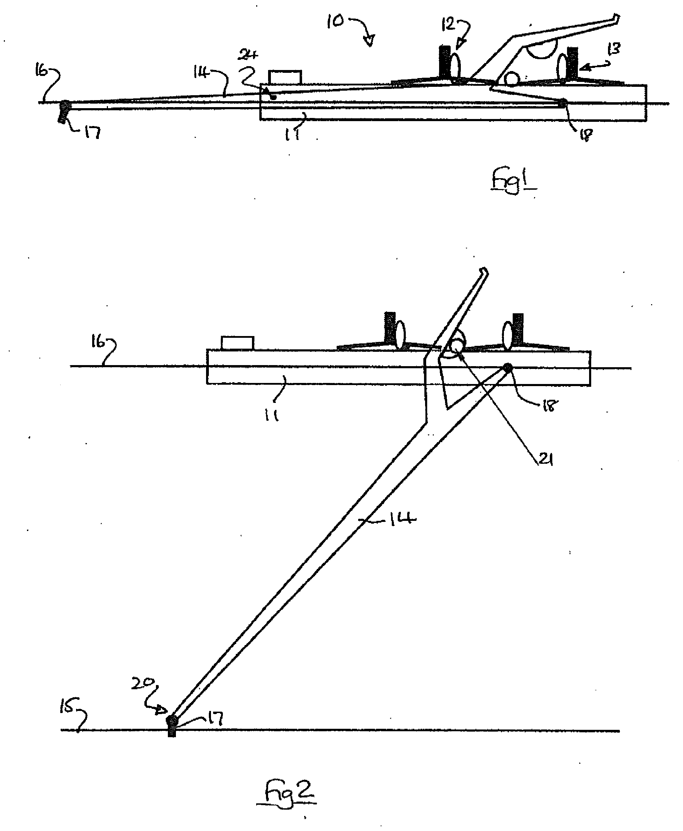

With reference to Figs. 1-4, a stream flow turbine assembly 10 comprises a support 11 for turbines 12,13, and a rigid tether 14. The underwater ground surface (e.g. sea bed) is indicated at 15, and the water surface at 16. An underwater anchor 17 is provided at one end of the tether 14 for fixing to the underwater ground surface or to a pre-positioned underwater mounting. The other end of the tether 14 is connected to the support via a pivot 18. The anchor 17 comprises an universal joint or the like, and a plug in male projection for a socket of an underwater anchorage.

Fig. 1 illustrates a deployment condition in which the assembly 10 is floated to an installation site, for example by being towed by a tug. The draft of the assembly is small, and the turbines 12,13 are arranged on the upward facing surface of the support 11 so as to be out of the water. The tether 14 may act as a towing arm for the assembly, and the anchor 17 constitutes a towing point substantially at the surface.

It will be appreciated that the support is buoyant, and this may be arranged in any suitable manner, for example by providing a suitable buoyancy chamber or chambers for the support. The support may itself comprise a closed hollow structure having the desired buoyancy. As will become apparent the buoyancy of the support is adjustable to permit the assembly to adopt a generating condition.

The tether 14 although typically buoyant, may be supported in the deployment condition of Fig. 1 by being locked or latched to the support 11 in a suitable manner. For example a removable locking pin 24 or the like may be provided, which may be automatically actuated.

Fig. 2 illustrates a maintenance condition of the assembly in which the tether 14 is released from the deployment condition and is anchored to the underwater ground surface 15. The tether anchorage 20 comprises an articulation which permits the support 11 to rise and fall with change in the level of the surface 16, for example as a tide rises and falls. This anchorage may also permit the support to yaw in response to changes in the stream flow direction, for example to accommodate reversal of tidal flow.

A brake 21 is provided to act between the tether 14 and the support 11, and may be used to damp or restrict relative motion if desired; a caliper brake is suitable.

In the maintenance condition of Fig. 2, the turbines are out of the water, and in a position suitable for maintenance, repair or replacement. Access for example from a boat is straightforward, and the support may be provided with suitable work platforms or the like.

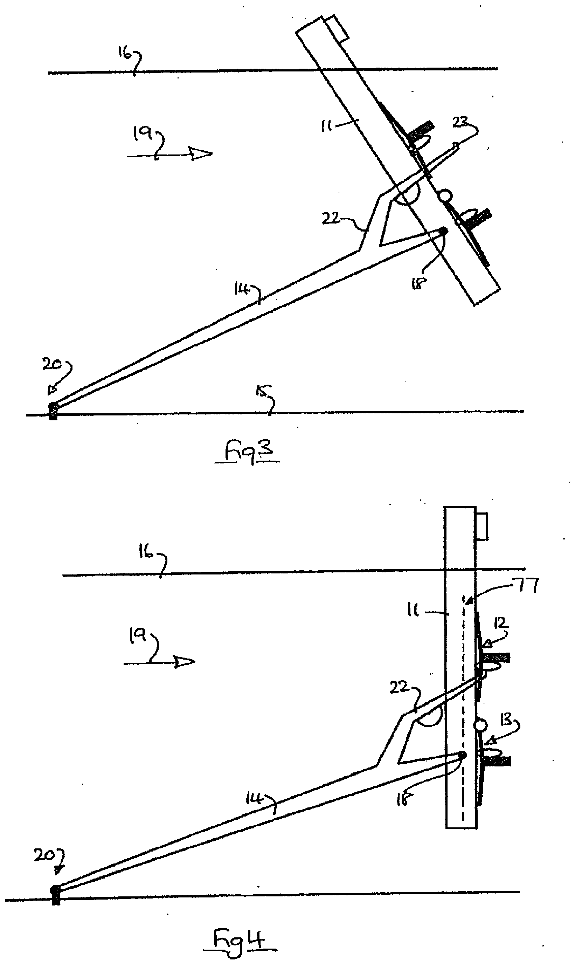

Fig. 3 illustrates a transition of the assembly from the maintenance to the operating condition. The buoyancy of the support is reduced by progressive addition of ballast, typically in the form of water admitted into the buoyancy chamber or chambers. The support is arranged to sink at the trailing end, and thus swings relatively about the pivot 18 (clockwise) until approaching the operating condition of Fig. 4. At this point it may be preferable for buoyancy control to be suspended or to cease, so that reverse motion of the support can be assured. Drag from the stream flow, indicated by arrow 19, may be used to assist in pivoting the support 11 to the generally vertical orientation of Fig. 4.

The turbines may also be allowed to auto-rotate or to be driven in reverse in order to enhance drag for the purposes of assisting movement to or from the maintenance condition. Where several turbines are provided, typically in different horizontal planes of use, differential rotation may be used to enhance movement. Controlling the speed of the turbines allows fine control of frame movement.

Alternatively active drag surfaces may be deployed, a motor may act via the pivot axis 18, or a push/pull device may be provided between the tether 14 and the support 11. The advantage of this arrangement is that the support can automatically (or with assistance) return to a slightly inclined condition, for example less than 10° to the vertical, from which a variation in buoyancy will assure resumption of the maintenance condition.

An alternative or additional means of adjusting the upright position of the frame for engagement of a latch such as pin 24, is to arrange for ballast chambers, for instance fore and aft of a vertical divider 77. Ballast water filling up the stern chamber (righthand as viewed) of the frame will cause it to rotate clockwise and the bow chamber (left hand as viewed), anti-clockwise.

For trimming of the frame in positions other than the vertical, ballast chambers may be disposed along the length of the frame so as to allow trimming of the balanced position of the frame when at an angle between the upright operating condition and the horizontal maintenance condition.

The tether 14 includes an auxiliary arm 22 which extends above the pivot 18 and has a straight or cranked end 23 engageable with an abutment of the support 11 when in the operating condition. The abutment may include a compliant buffer or the like to prevent shock loading. Once in the condition of Fig. 4 a lock or latch is engaged to prevent further relative movement of the support and tether 14 beyond a defined range, typically no more than ±10° about the mean position.

As will be observed from Fig. 4, the support is arranged to pierce the surface of the water so as to give an indication of the position thereof. A suitable warning light may be provided. In the operating condition, the turbines 12,13 are wholly submerged, and adapted to generate electrical power, which may be transmitted in any appropriate manner, for example via a cable of the tether 14 and an underwater power collector of any suitable kind.

It will be appreciated that should maintenance or repair of the turbines be required, the assembly may be moved from the operating condition (Fig. 4) to the maintenance condition (Fig. 2) by unlatching the abutment lock, and increasing buoyancy of the support 11, which may be accomplished by pumping ballast water from the buoyancy chamber(s). The brake may be used to control the speed of relative movement about the pivot 18, to ensure smooth progressive transition.

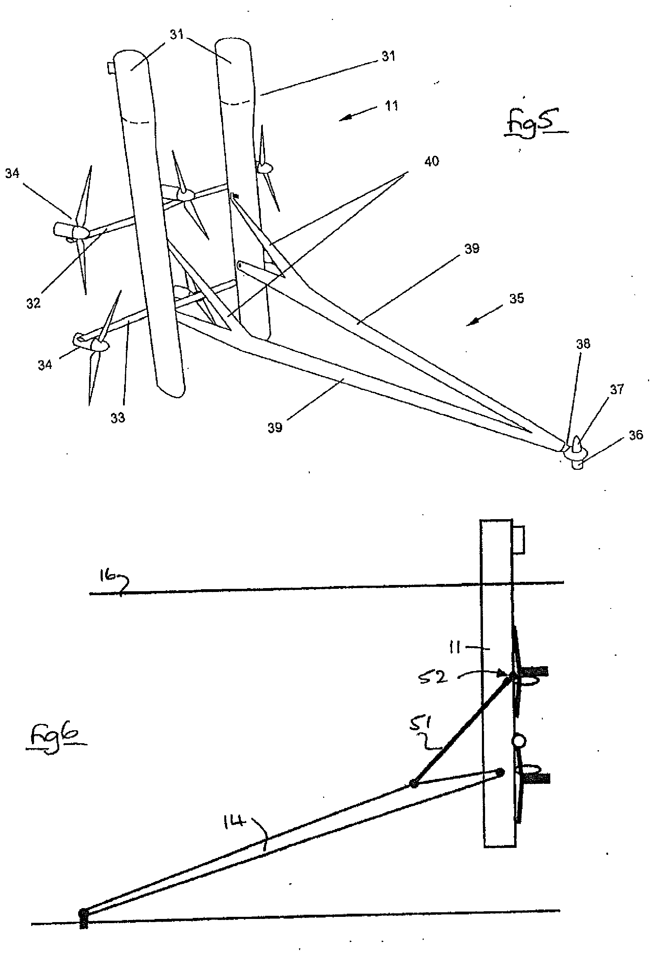

A perspective view of an exemplar multi-turbine array is illustrated in Fig. 5, and comprises a support 11 consisting of twin buoyancy chambers 31 connected by substantially horizontal upper and lower cross arms 32,33, to which are attached an array of six electricity generating turbines 34. The arrangement of Fig. 5 is illustrated in the operating condition. The support 11 comprises a generally cruciform frame which lies transverse to the stream flow direction in use, and is substantially co-planar with the surface of the water when in the maintenance condition.

A 'Y' shaped tether 35 has the apex connected to an underwater anchorage 36, which in this embodiment allows 360° rotation about a vertical axis at 37, and up and down motion about a horizontal axis at 38. The anchorage may also allow rolling of the structure from side to side, if desired.

Each arm 39 of the tether is pivoted to the support adjacent a connection between the lower cross arm 33 and a respective chamber 31, and further defines a respective auxiliary arm 40, having a cranked abutment end for engagement adjacent a connection between the upper cross arm 32 and a respective chamber 31. The arrangement is generally symmetrical, as illustrated in Fig. 5. The illustrated arrangement positions the tether 35 low in the water, and thus does not impede unduly the passage of shipping.

Fig. 6 illustrates an alternative embodiment in which the or each auxiliary arm comprises a rigid link 51 pivoted at one end to the tether 14, and sliding in a collar or trunnion 52 pivoted on the support 11. The arrangement is similar to the stay of an opening window. The link 51 has an abutment portion at the free end for engagement with a buffer of the support 11 and a suitable lock or latch to prevent relative movement when in the operating condition. The abutment portion maintains the support in a substantially vertical plane when in the operating condition. Upon movement to the maintenance condition, the link 51 slides through the trunnion, and may be braked so as to avoid abrupt changes of orientation of the support 11.

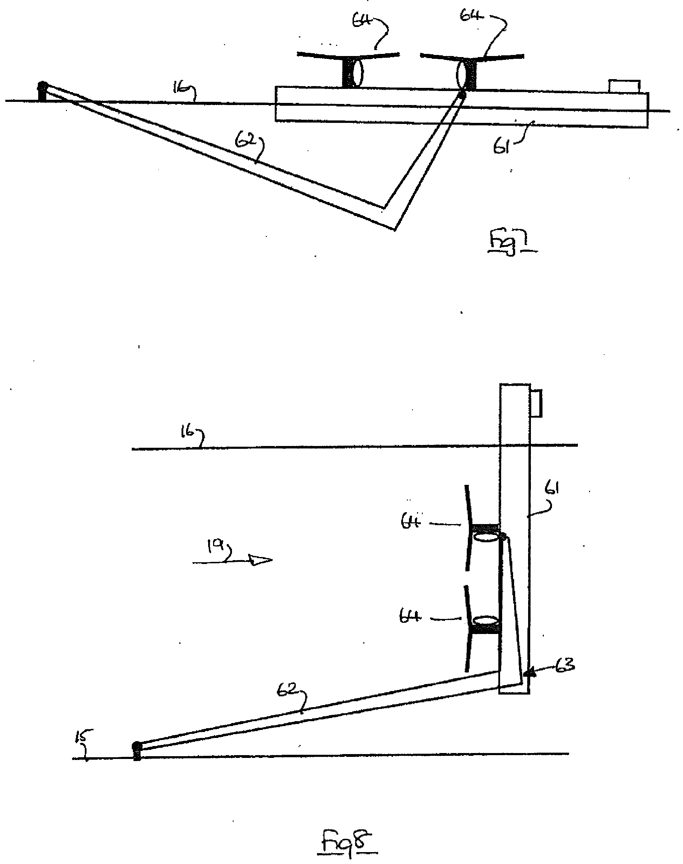

Figs. 7 and 8 illustrate a third embodiment in which the turbines 64 are mounted toward the bow or leading end of the support 61, and the support is allowed to sink bow-first (anti-clockwise) to the operating condition of Fig. 8. The tether 62 is cranked, for example at an angle greater than 60°, so as to have a greater draught in the deployment condition of Fig. 7, but as can be seen from Fig. 8 the tether lies close to the underwater surface in the operating condition. A suitable abutment and latch may be provided at 63 to prevent relative movement of the tether 62 and support 61. In this arrangement the turbines 64 are on the leading side of the support 61, and thus unobstructed, as compared with the arrangement of Figs. 4 and 6.

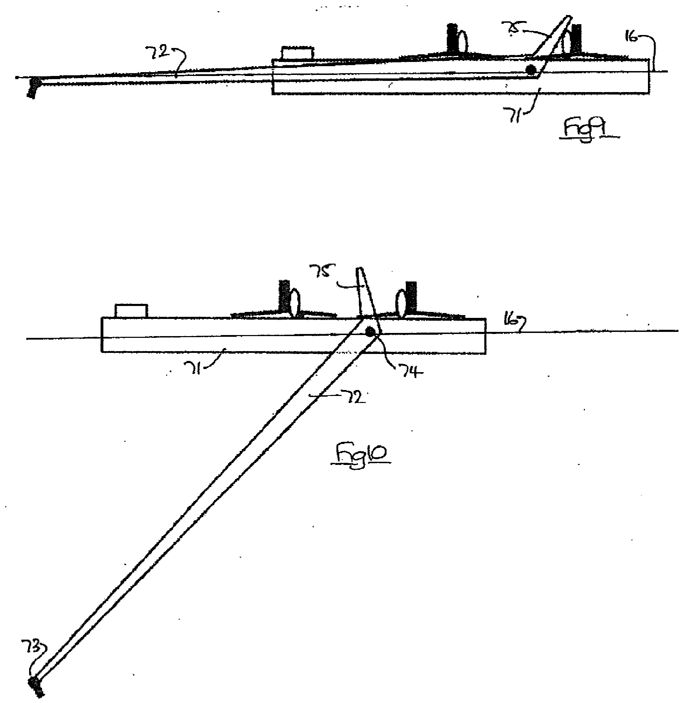

Figs. 9-11 illustrate a fourth embodiment in which the tether 72 is straight from anchor end 73 to the frame pivot 74, and thus has a shallow draught in the deployment condition (Fig. 9). Fig. 10 illustrates the maintenance condition.

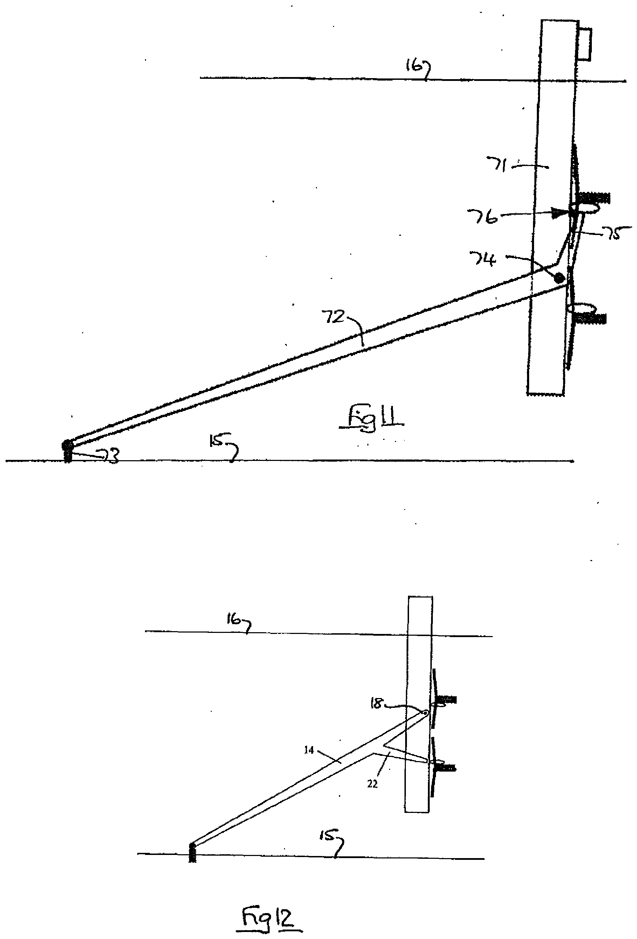

Fig. 11 shows the operating condition in which the support 71 has pivoted clockwise through 90°, a cranked end 75 of the tether constituting the abutment 76 for a trailing face of the support 71. The pivot 74 is at the lower portion of the support 71 (Fig. 11) and the abutment is approximately at the mid-point of the support. A buffer may be incorporated, as previously described.

In the drawings, the main frame spars 31 of Fig. 5 are illustrated as straight (and horizontal in the maintenance condition). In practice these spars may have a slight dog leg so as to be down in the middle in the maintenance condition. Such an arrangement may provide for enhanced sea-keeping and improved buoyancy balance when in the operating condition.

Fig. 12 shows a further example of an operating system arrangement where in the operating condition the tether 14 is connected further up the frame (adjacent the mid-point), with a lower auxiliary arm 22 providing a fixing against the stern, or lower part, of the frame (approximately midway between the main pivot 18 and the lower end).

## Claims

1. An underwater turbine mounting comprising a buoyant elongate frame (11) adapted to mount one or more stream flow turbines (12, 13) thereon, a rigid arm (14) having a pivotal connection (18) at one end to said frame (11), the other end of said arm (14) being adapted for connection to an underwater anchorage (17), and means to vary the buoyancy of said frame (11) whereby said frame (11) is pivotable in use about said connection (18) between a substantially horizontal maintenance position and a substantially upright operating position, wherein said frame (11) comprises buoyancy chambers adapted to be ballasted with water, and wherein a first buoyancy chamber is arranged such that ballast water filing up the first chamber will cause the frame (11) to rotate towards the maintenance position and wherein a second chamber is arranged such that ballast water filling up the second chamber will cause the frame (11) to rotate towards the operating position, wherein in the operating condition the first buoyancy chamber is provided fore and the second buoyancy chamber aft of an upright axis of the frame with respect to a stream flow direction, to permit trimming of the upright orientation of the frame (11).

2. A mounting according to claim 1, and further including one or more valves operable to permit addition and/or removal of ballast water from said chambers.

3. A mounting according to claim 1 or 2, wherein the fore and aft chambers are delimited in the operating condition by a substantially vertical divider (77) of the frame (11).

4. A mounting according to any of claims 1-3, wherein in the maintenance condition buoyancy chambers are provided lengthwise of the frame (11), with respect to the stream flow direction, said chambers permitting trimming of the angle of the frame (11) with respect to the arm (14) when in transition between the maintenance and operating conditions.

5. A mounting according to claims 1-4, and further including a pump operable to add and/or remove ballast water from said chambers.

6. A mounting according to any of claims 1 to 5, wherein the frame (11) is adapted such that rotation is achieved by differential ballasting of the chambers.

7. A mounting according to any preceding claim, and having a floating deployment condition wherein said frame (11) is in the maintenance position, and the other end of said arm (14) is substantially horizontally aligned therewith, and wherein said other end of said arm (14) comprises a towing point for said frame (11).

8. A mounting according to any preceding claim, wherein said connection (18) is at a portion of said frame which is submerged in the operating position.

9. A mounting according to any preceding claim, wherein said frame (11) is partially submerged in the operating position.

10. A mounting according to any preceding claim, and comprising a plurality of substantially parallel elongate frames linked by one or more cross members (32, 33), wherein said arm (39) is forked from an anchorage end for pivotal connection to two of said frames.

11. A mounting according to any preceding claim, and further including one or more stream flow turbines (12, 13) thereon, wherein said turbines (12, 13) are substantially above the waterline in the maintenance position.

12. A method of moving an underwater turbine mounting according to any preceding claim between a substantially horizontal maintenance position and a substantially upright operating position, the method comprising the steps of anchoring said arm (14) to an underwater anchorage (17) and varying the buoyancy of said frame.

13. A method of claim 12, wherein the method further comprises the steps of:
• rotating the frame from the operating position to the maintenance position by filling the first buoyancy chamber with ballasting water;
• rotating the frame from the maintenance position to the operating position by filling the second buoyancy chamber with ballasting water.

14. A method of claim 13, wherein ballasting water is removed from the second chamber when filling the first chamber and vice versa.

## Patentansprüche

1. Unterwasserturbinenträger mit einem schwimmfähigen länglichen Rahmen (11), an dem eine oder mehrere Strömungsturbinen (12,13) anbringbar sind, einem starren Arm (14), der an einem Ende eine Schwenkverbindung (18) mit dem Rahmen (11) aufweist, wobei das andere Ende des Arms (14) zur Verbindung mit einer Unterwasserverankerung (17) in der Lage ist, und mit Vorrichtungen zum Variieren der Auftriebsfähigkeit des Rahmens (11), wobei der Rahmen (11) im Betrieb um die Verbindung (18) herum zwischen einer im Wesentlichen horizontalen Wartungsposition und einer im Wesentlichen vertikalen Betriebsposition schwenkbar ist, wobei der Rahmen (11) Auftriebskammern aufweist, die mit Wasser als Ballast füllbar sind, und wobei eine erste Auftriebskammer derart angeordnet ist, dass Ballastwasser, welches die erste Kammer auffüllt, eine Drehung des Rahmens (11) zu der Wartungsposition hin bewirkt, und wobei eine zweite Kammer derart angeordnet ist, dass Ballastwasser, welches die zweite Kammer auffüllt, eine Drehung des Rahmens (11) zu der Betriebsposition hin bewirkt, wobei in der Betriebsposition die erste Auftriebskammer relativ zu einer Strömungsrichtung vor und die zweite Auftriebskammer hinter einer vertikalen Achse des Rahmens angeordnet ist, um ein Trimmen der vertikalen Anordnung des Rahmens (11) zu ermöglichen.

2. Träger nach Anspruch 1, und ferner mit einem oder zwei Ventilen, die zum Ermöglichen einer Hinzugabe und/oder Entnahme von Ballastwasser in die bzw. aus den Kammern betätigbar sind.

3. Träger nach Anspruch 1 oder 2, bei dem die vorderen und hinteren Kammern im Betriebszustand durch eine im Wesentlichen vertikale Trennwand (77) des Rahmens (11) begrenzt sind.

4. Träger nach einem der Ansprüche 1-3, bei dem im Betriebszustand Auftriebskammern relativ zur Strömungsrichtung in Längsrichtung des Rahmens (11) vorgesehen sind, wobei im Übergang zwischen den Wartungs- und Betriebszuständen die Kammern ein Trimmen des Winkels des Rahmens (11) relativ zu dem Arm (14) ermöglichen.

5. Träger nach einem der Ansprüche 1-4, und ferner mit einer Pumpe, die zur Hinzugabe und/oder Entnahme von Ballastwasser in die bzw. aus den Kammern betätigbar ist.

6. Träger nach einem der Ansprüche 1-5, bei dem der Rahmen (11) derart ausgestaltet ist, dass eine Drehung durch Differential-Ballastbeschickung der Kammern erzielt wird.

7. Träger nach einem der vorhergehenden Ansprüche, und mit einem Floating-Installationszustand, bei dem sich der Rahmen (11) in der Wartungsposition befindet und das andere Ende des Arms (14) im Wesentlichen horizontal mit diesem ausgerichtet ist, und bei dem das andere Ende des Arms (14) einen Abschlepp-Punkt für den Rahmen (11) aufweist.

8. Träger nach einem der vorhergehenden Ansprüche, bei dem die besagte Verbindung (18) an einem Abschnitt des Rahmens angeordnet ist, der sich in der Betriebsposition unter Wasser befindet.

9. Träger nach einem der vorhergehenden Ansprüche, bei dem sich der Rahmen (11) in der Betriebsposition teilweise unter Wasser befindet.

10. Träger nach einem der vorhergehenden Ansprüche, und mit mehreren im Wesentlichen parallelen länglichen Rahmen, die durch ein oder mehrere Querteile (32,33) verbunden sind, wobei der Arm (39) von einem Verankerungsende ausgehend zwecks Schwenkverbindung mit zwei der Rahmen gegabelt ist.

11. Träger nach einem der vorhergehenden Ansprüche, und ferner mit einer oder mehreren Strömungsturbinen (12,13) an dem Träger, wobei die Turbinen (12,13) in der Wartungsposition im Wesentlichen über der Wasserlinie angeordnet sind.

12. Verfahren zum Bewegen eines Unterwasserturbinenträgers nach einem der vorhergehenden Ansprüche zwischen einer im Wesentlichen horizontalen Wartungsposition und einer im Wesentlichen vertikalen Betriebsposition, wobei das Verfahren die Schritte des Verankerns des Arms (14) an einer Unterwasserverankerung (17) und des Variierens des Auftriebs des Rahmens umfasst.

13. Verfahren nach Anspruch 12, wobei das Verfahren ferner die Schritte umfasst:
• Drehen des Rahmens aus der Betriebsposition in die Wartungsposition durch Füllen der ersten Auftriebskammer mit Ballastwasser;
• Drehen des Rahmens aus der Wartungsposition in die Betriebsposition durch Füllen der zweiten Auftriebskammer mit Ballastwasser.

14. Verfahren nach Anspruch 13, bei dem Wasser aus der zweiten Kammer entnommen wird, wenn die erste Kammer gefüllt wird, und umgekehrt.

## Revendications

1. Support de turbine sous-marine comprenant une structure allongée flottante (11) adaptée pour que soient montées sur celle-ci une ou plusieurs turbines à écoulement (12, 13), un bras rigide (14) ayant une liaison pivotante (18) au niveau d'une extrémité de ladite structure (11), l'autre extrémité dudit bras (14) étant adaptée pour la liaison à un ancrage sous-marin (17), et un moyen pour faire varier la flottabilité de ladite structure (11), moyennant quoi ladite structure (11) peut, lors de l'utilisation, pivoter autour de ladite liaison (18) entre une position de maintenance sensiblement horizontale et une position de fonctionnement sensiblement verticale, dans lequel ladite structure (11) comprend des chambres de flottabilité adaptées pour être lestées avec de l'eau, et dans lequel une première chambre de flottabilité est agencée de manière à ce que le remplissage de la première chambre avec de l'eau de lestage fasse en sorte que la structure (11) tourne vers la position de maintenance et dans lequel une seconde chambre est agencée de manière à ce que le remplissage de la seconde chambre avec de l'eau de lestage fasse en sorte que la structure (11) tourne vers la position de fonctionnement, dans lequel, dans la condition de fonctionnement, la première chambre de flottabilité est prévue à l'avant et la seconde chambre de flottabilité à l'arrière d'un axe vertical de la structure par rapport à une direction d'écoulement, afin de permettre le réglage de l'orientation verticale de la structure (11).

2. Support selon la revendication 1, et incluant en outre une ou plusieurs soupapes pouvant fonctionner de façon à permettre l'ajout et/ou le retrait d'eau de lestage desdites chambres.

3. Support selon la revendication 1 ou 2, dans lequel les chambres avant et arrière sont délimitées dans la condition de fonctionnement par un séparateur sensiblement vertical (77) de la structure (11).

4. Support selon l'une quelconque des revendications 1 à 3, dans lequel, dans la condition de maintenance, les chambres de flottabilité sont prévues dans le sens de la longueur de la structure (11), par rapport à la direction d'écoulement, lesdites chambres permettant le réglage de l'angle de la structure (11) par rapport au bras (14) lors de la transition entre les conditions de maintenance et de fonctionnement.

5. Support selon l'une quelconque des revendications 1 à 4, et incluant en outre une pompe pouvant fonctionner de façon à ajouter et/ou retirer de l'eau de lestage desdites chambres.

6. Support selon l'une quelconque des revendications 1 à 5, dans lequel la structure (11) est adaptée de manière à ce qu'une rotation soit effectuée par un lestage différentiel des chambres.

7. Support selon une quelconque revendication précédente, et ayant une condition de déploiement flottant, dans lequel ladite structure (11) est dans la position de maintenance, et l'autre extrémité dudit bras (14) est sensiblement alignée horizontalement avec celui-ci, et dans lequel ladite autre extrémité dudit bras (14) comprend un point de remorquage pour ladite structure (11).

8. Support selon une quelconque revendication précédente, dans lequel ladite liaison (18) se trouve au niveau d'une partie de ladite structure qui est immergée dans la position de fonctionnement.

9. Support selon une quelconque revendication précédente, dans lequel ladite structure (11) est partiellement immergée dans la position de fonctionnement.

10. Support selon une quelconque revendication précédente, et comprenant une pluralité de structures allongées sensiblement parallèles reliées par un ou plusieurs éléments transversaux (32, 33), dans lequel ledit bras (39) est fourchu depuis une extrémité d'ancrage pour une liaison pivotante avec deux desdites structures.

11. Support selon une quelconque revendication précédente, et incluant en outre une ou plusieurs turbines à écoulement (12, 13) sur celui-ci, dans lequel lesdites turbines (12, 13) se trouvent sensiblement au-dessus de la ligne de flottaison dans la position de maintenance.

12. Procédé pour déplacer un support de turbine sous-marine selon une quelconque revendication précédente entre une position de maintenance sensiblement horizontale et une position de fonctionnement sensiblement verticale, le procédé comprenant les étapes consistant à ancrer ledit bras (14) à un ancrage sous-marin (17) et à faire varier la flottabilité de ladite structure.

13. Procédé selon la revendication 12, dans lequel le procédé comprend en outre les étapes consistant à :
- faire tourner la structure de la position de fonctionnement à la position de maintenance en remplissant la première chambre de flottabilité avec de l'eau de lestage ;
- faire tourner la structure de la position de maintenance à la position de fonctionnement en remplissant la seconde chambre de flottabilité avec de l'eau de lestage.

14. Procédé selon la revendication 13, dans lequel de l'eau de lestage est retirée de la seconde chambre lors du remplissage de la première chambre et vice versa.
